(19)

Europäisches
Patentamt
European
Patent Office
Office européen
des brevets

(11)     **EP 3 489 926 A1**

(12)     **EUROPEAN PATENT APPLICATION**
published in accordance with Art. 153(4) EPC

(43) Date of publication:
**29.05.2019 Bulletin 2019/22**

(21) Application number: **16910451.0**

(22) Date of filing: **25.07.2016**

(51) Int Cl.:
*G08G 1/16* (2006.01)          *B60R 21/00* (2006.01)
*B60W 30/12* (2006.01)

(86) International application number:
**PCT/JP2016/071712**

(87) International publication number:
**WO 2018/020547 (01.02.2018 Gazette 2018/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Nissan Motor Co., Ltd.
Yokohama-shi, Kanagawa 221-0023 (JP)**

(72) Inventors:
• **MISHINA, Yohei
  Atsugi-shi
  Kanagawa 243-0123 (JP)**
• **FUJITA, Susumu
  Atsugi-shi
  Kanagawa 243-0123 (JP)**

(74) Representative: **Grünecker Patent- und
Rechtsanwälte
PartG mbB
Leopoldstraße 4
80802 München (DE)**

(54)     **LANE CHANGE ASSISTANCE METHOD AND LANE CHANGE ASSISTANCE DEVICE**

(57)     A lane change assistance method comprising: identifying a non-recommended region in which a lane change is not recommended, on the basis of road information of a road on which a subject vehicle travels; setting a region required for the subject vehicle to change lanes as a determination target region on the basis of positional information and vehicle speed information of the subject vehicle; and when the determination target region includes a part or all of the non-recommended region, making a determination that the subject vehicle cannot change lanes and outputting a result of the determination.

FIG. 1

## Description

[Technical Field]

The present invention relates to a lane change assistance method and a lane change assistance apparatus.

[Background Art]

A technique of determining whether or not a subject vehicle can change lanes has heretofore been known (e.g. Patent Document 1: JP2000-020898A). This technique includes detecting a first distance and a first relative speed of the subject vehicle with respect to an object that is located ahead of the subject vehicle and in a lane to which the subject vehicle is to change lanes and a second distance and a second relative speed of the subject vehicle with respect to an object that is located behind the subject vehicle and in the lane to which the subject vehicle is to change lanes and determining whether or not the subject vehicle can change lanes, on the basis of the first and second distances and the first and second relative speeds.

[Prior Art Document]

[Patent Document]

[Patent Document 1] JP2000-020898A

[Summary of Invention]

[Problems to be solved by Invention]

In the prior art technique, however, a determination as to whether or not a lane change is possible is made on the basis only of the relationships between the subject vehicle and the objects located ahead of and behind the subject vehicle and in the lane to which the subject vehicle is to change lanes and, therefore, a determination that a lane change is possible may be made even in a region in which a lane change is not recommended under the traffic rules.

A problem to be solved by the present invention is to provide a lane change assistance method and a lane change assistance apparatus with which a determination can be appropriately made as to whether or not a lane change is possible.

[Means for solving problems]

The present invention solves the above problem through identifying a non-recommended region in which a lane change is not recommended, on the basis of road information, setting a region required for a subject vehicle to change lanes as a determination target region on the basis of positional information and vehicle speed information of the subject vehicle, and when the determination target region includes a part or all of the non-recommended region, making a determination that a lane change cannot be performed.

[Effect of Invention]

According to the present invention, a determination can be appropriately made as to whether or not a lane change is possible through identifying the non-recommended region in which a lane change is not recommended, on the basis of road information and making a determination that a lane change cannot be performed in the non-recommended region.

[Brief Description of Drawings]

FIG. 1 is a block diagram illustrating the configuration of a travel control apparatus according to one or more embodiments of the present invention.
FIG. 2 is a diagram exemplifying a scene in which the subject vehicle travels in the vicinity of a pedestrian crosswalk.
FIG. 3 is a diagram illustrating an example of a determination target region in the exemplary scene illustrated in FIG. 2.
FIG. 4 is a diagram illustrating an example of a non-recommended region in the exemplary scene illustrated in FIG. 2.

FIG. 5 is a diagram illustrating an example of an adjacent lane target region in the exemplary scene illustrated in FIG. 2.

FIG. 6 is a diagram for describing a method of determining whether or not a lane change can be performed in the exemplary scene illustrated in FIG. 2.

FIG. 7 is a flowchart illustrating a lane change assistance process according to a first embodiment.

FIG. 8 is a set of diagrams for describing a method of setting a determination target region according to a second embodiment.

FIG. 9 is a flowchart illustrating a lane change assistance process according to the second embodiment.

[Mode(s) for Carrying out the Invention]

Hereinafter, one or more embodiments of the present invention will be described with reference to the drawings. In the embodiments, a travel control apparatus equipped in a vehicle will be exemplified and described.

«First Embodiment»

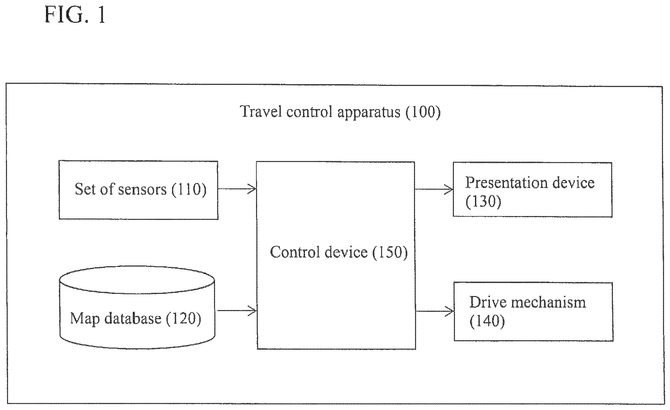

FIG. 1 is a block diagram illustrating the configuration of a travel control apparatus 100 according to the present embodiment. As illustrated in FIG. 1, the travel control apparatus 100 according to the present embodiment includes a set of sensors 110, a map database 120, a presentation device 130, a drive mechanism 140, and a control device 150. These devices are connected to one another via a controller area network (CAN) or other in-vehicle LAN for mutually exchanging information.

The set of sensors 110 includes a GPS device that detects the position of the subject vehicle and a vehicle speed sensor that detects the vehicle speed of the subject vehicle. The GPS device detects radio waves transmitted from a plurality of communication satellites to periodically acquire positional information of the subject vehicle and detects the current position of the subject vehicle on the basis of the acquired positional information of the subject vehicle, angle variation information acquired from a gyro-sensor, and the vehicle speed acquired from the vehicle speed sensor. The set of sensors 110 further includes a camera that captures an image around the subject vehicle and a ranging sensor that detects an obstacle around the subject vehicle. Examples of the ranging sensor include a laser radar, an ultrasonic sensor, a sound wave sensor, and an infrared sensor.

The map database 120 stores map information and road information. The road information includes information on boundary lines (such as lane marks and curbstones), intersections, stop lines, pedestrian crosswalks, road shapes, road curvatures, etc. of each road.

The presentation device 130 presents to the driver, for example, a determination result as to whether or not the subject vehicle can change lanes. Examples of such a presentation device 130 include a lamp installed in an instrument panel, the display of a navigation device, and a speaker. For example, when the control device 150 determines that a lane change cannot be performed, the driver can be made to perceive that a lane change cannot be performed, by lighting the lamp of the presentation device 130, by controlling the display of the navigation device to display a message that a lane change cannot be performed, or by controlling the speaker to output a sound or voice that informs that a lane change cannot be performed.

The drive mechanism 140 includes an engine, a brake, a steering actuator, and other necessary components that are used to allow the subject vehicle to travel. For example, in a case of performing the lane change control of automatically changing lanes in accordance with a command from the driver, when the control device 150, which will be described below, determines that a lane change can be performed, the travel control apparatus 100 can control the operation of the engine, brake, and steering actuator included in the drive mechanism 140 thereby to automatically perform the lane change of the subject vehicle.

The control device 150 is composed of a read only memory (ROM) that stores programs for controlling travel of the subject vehicle, a central processing unit (CPU) that executes the programs stored in the ROM, and a random access memory (RAM) that serves as an accessible storage device. As substitute for or in addition to the CPU, a micro processing unit (MPU), a digital signal processor (DSP), an application specific integrated circuit (ASIC), a field programmable gate array (FPGA), or the like can also be used as an operating circuit.

The control device 150 executes the programs stored in the ROM using the CPU thereby to achieve the following functions: a subject vehicle information acquisition function of acquiring information on the subject vehicle; an ambient information acquisition function of acquiring information on the surroundings of the subject vehicle; a lane change determination function of determining whether or not the subject vehicle can change lanes; and a travel control function of controlling travel of the subject vehicle. These functions of the control device 150 will be described below.

The subject vehicle information acquisition function of the control device 150 serves to acquire information that includes the vehicle speed information and positional information of the subject vehicle, as the subject vehicle information. For example, the subject vehicle information acquisition function can serve to acquire the positional information of the subject vehicle as the subject vehicle information from the GPS device included in the set of sensors 110 and can also serve to acquire the vehicle speed information of the subject vehicle as the subject vehicle information from the vehicle speed sensor included in the set of sensors 110. In addition or alternatively, the subject vehicle information acquisition function can be configured to acquire the positional information of the subject vehicle on the basis of an image captured by the camera included in the set of sensors 110.

The ambient information acquisition function of the control device 150 serves to acquire information on roads and obstacles around the subject vehicle as the ambient information. For example, the ambient information acquisition function can serve to acquire the road information of the roads around the subject vehicle as the ambient information. The road information is stored in the map database 120. Thus, the ambient information acquisition function can serve to acquire the road information, which includes the boundary lines (such as lane marks and curbstones), intersections, stop lines, pedestrian crosswalks, road shapes, and road curvatures of the roads around the subject vehicle, as the ambient information. In addition or alternatively, the ambient information acquisition function can serve to acquire the road information of the roads around the subject vehicle as the ambient information from the camera and/or ranging sensor included in the set of sensors 110.

In addition or alternatively, the ambient information acquisition function can also serve to acquire the information on the obstacles present around the subject vehicle as the ambient information from the camera and/or ranging sensor included in the set of sensors 110. For example, the ambient information acquisition function can serve to acquire the information on the presence or absence of a neighboring vehicle traveling around the subject vehicle as the ambient information from the camera and/or ranging sensor included in the set of sensors 110. When such a neighboring vehicle is present, the ambient information acquisition function can serve to acquire the information on the position, traveling direction, and vehicle speed of the neighboring vehicle as the ambient information from the camera and/or ranging sensor included in the set of sensors 110.

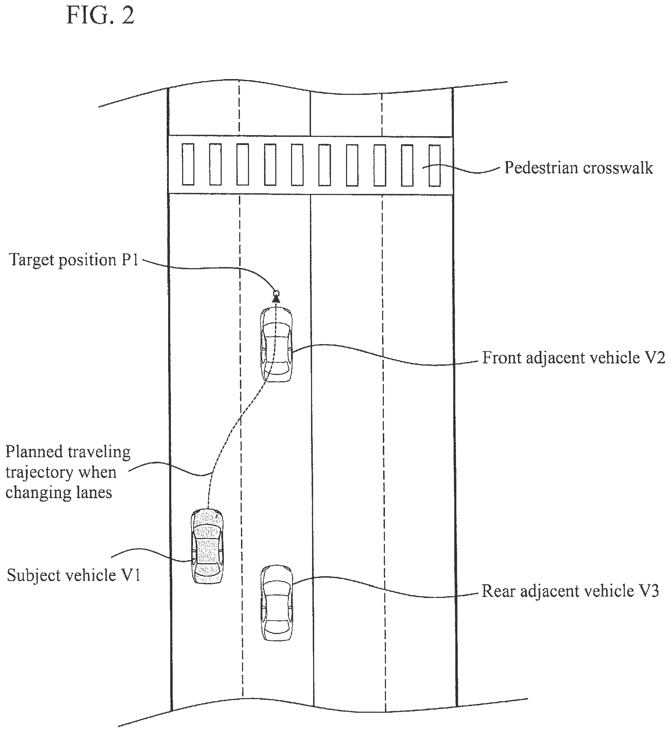

The lane change determination function of the control device 150 serves to determine whether or not the subject vehicle can change lanes. With reference to the scene illustrated in FIG. 2, a method of determining whether or not a lane change is possible will be described below. This method is performed using the lane change determination function. FIG. 2 is a diagram exemplifying a scene in which the subject vehicle V1 is traveling before a pedestrian crosswalk. In the following description, the lane in which the subject vehicle V1 travels will be referred to as a "subject lane" and a lane adjacent to the subject lane will be referred to as an "adjacent lane."

First, as illustrated in FIG. 2, the lane change determination function serves to calculate a planned traveling trajectory when the subject vehicle V1 changes lanes. In particular, in the present embodiment, the lane change determination function serves to calculate a smooth planned traveling trajectory in accordance with the vehicle speed of the subject vehicle V1 such that the occupants of the subject vehicle V1 do not feel uncomfortable and/or uneasy as the subject vehicle V1 turns abruptly. For example, when the subject vehicle V1 is traveling at a speed of 60 km/h, in order to obtain a smooth planned traveling trajectory, the lane change determination function can serve to calculate the planned traveling trajectory such that the time required for the lane change (the time required for the subject vehicle V1 to move from the current position to a target position P1) is 3 seconds. When the subject vehicle V1 is traveling at a speed faster than 60 km/h, in order that the subject vehicle V1 can smoothly change lanes, the lane change determination function can serve to calculate the planned traveling trajectory such that the subject vehicle V1 changes lanes while taking a longer time than 3 seconds.

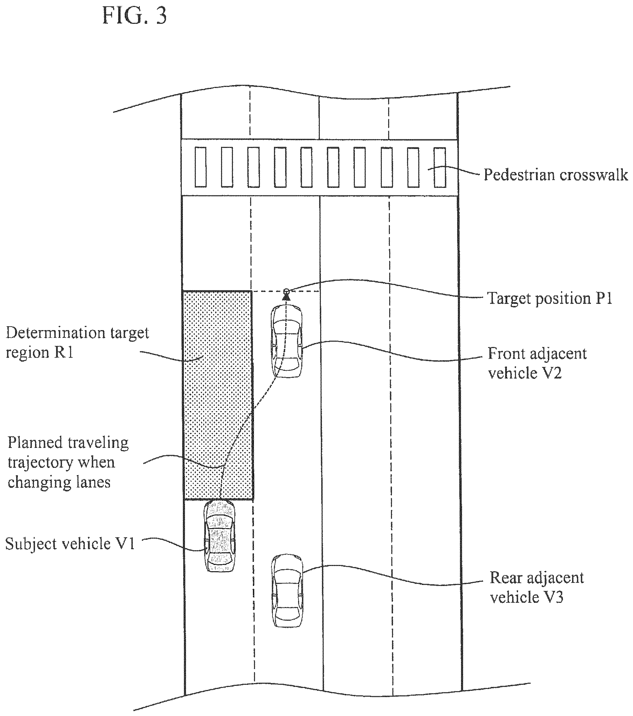

Then, the lane change determination function serves to set, on the subject lane, a determination target region R1 for determining whether or not a lane change is possible, on the basis of the vehicle speed information and positional information of the subject vehicle acquired using the subject vehicle information acquisition function. The lane change determination function serves first to calculate a travel distance required for the subject vehicle V1 to change lanes. For example, when the subject vehicle V1 is traveling at a speed of 60 km/h and the planned traveling trajectory is calculated such that the time required for a lane change is 3 seconds, the lane change determination function can serve to calculate the travel distance required for the subject vehicle V1 to change lanes as 50 m. Then, as illustrated in FIG. 3, the lane change determination function can serve to set a specific region of the region on the subject lane as the determination target region R1. The specific region is a region that is defined from the position of the subject vehicle V1 (its front end part) to the calculated travel distance. For example, when the travel distance required for the subject vehicle to change lanes is 50 m, as illustrated in FIG. 3, the lane change determination function can serve to set, as the determination target region R1, a specific region of the region on the subject lane from the position of the subject vehicle V1 to the travel distance of 50 m required for the subject vehicle V1 to change lanes.

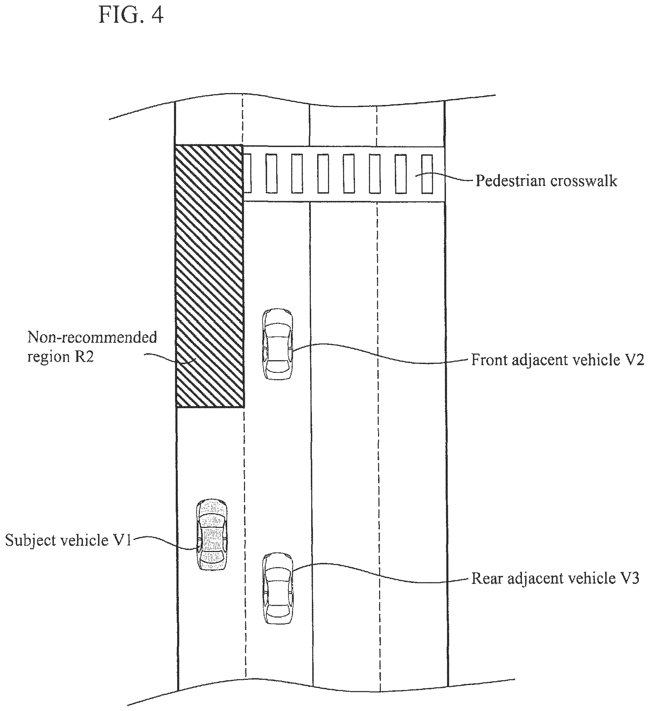

Then, the lane change determination function serves to set a region in which a lane change is not recommended as a non-recommended region R2 on the basis of the road information of the road around the subject vehicle. Specifically, the lane change determination function serves to set a region in which a lane change is not recommended, such as a region in which a lane change is prohibited by the traffic rules, as the non-recommended region R2 on the basis of the road information of the road lying ahead of the subject vehicle acquired using the ambient information acquisition function. For example, when a lane change is prohibited by the traffic rules in a region of 30 m just before the pedestrian crosswalk, as illustrated in FIG. 4, the lane change determination function can serve to set the region of 30 m just before the pedestrian crosswalk in the region on the subject lane as the non-recommended region R2.

Subsequently, the lane change determination function serves to set, on the adjacent lane, an adjacent lane target region R3 for determining whether or not a lane change is possible. Specifically, the lane change determination function serves first to calculate a frontward inter-vehicle distance D1 and a rearward inter-vehicle distance D2 that are distances after the lane change. For example, the lane change determination function can serve to calculate a frontward inter-vehicle distance based on an inter-vehicle time (THW: Time-Headway) and a frontward inter-vehicle distance based on a collision margin time (TTC: Time To Collision) and acquire a longer distance out of the frontward inter-vehicle distance based on the inter-vehicle time (THW) and the frontward inter-vehicle distance based on the collision margin time (TTC) as the frontward inter-vehicle distance D1 after the lane change. Likewise, the lane change determination function can serve to calculate a rearward inter-vehicle distance based on the inter-vehicle time (THW) and a rearward inter-vehicle distance based on the collision margin time (TTC) and acquire a longer distance out of the rearward inter-vehicle distance based on the inter-vehicle time (THW) and the rearward inter-vehicle distance based on the collision margin time (TTC) as the rearward inter-vehicle distance D2 after the lane change. Methods of calculating the frontward inter-vehicle distance D1 and the rearward inter-vehicle distance D2 will be described in detail below.

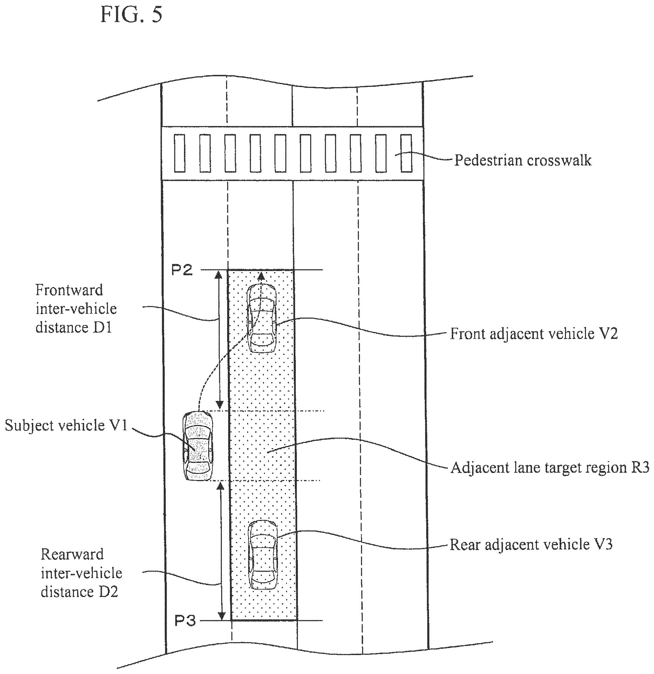

For example, the lane change determination function can serve to calculate a distance obtained by multiplying a desired inter-vehicle time (THW) after the lane change by the vehicle speed of the subject vehicle V1 as the frontward inter-vehicle distance based on the inter-vehicle time (THW). The desired inter-vehicle time (THW) after the lane change is not particularly limited and can be appropriately set for each vehicle speed, such as by experiments. For example, in the example illustrated in FIG. 5, when the vehicle speed of the subject vehicle V1 is 60 km/h and the desired inter-vehicle time (THW) after the lane change is 2 seconds, the lane change determination function can serve to calculate the frontward inter-vehicle distance based on the inter-vehicle time (THW) as 33 m.

In addition, when the subject vehicle V1 is approaching a front adjacent vehicle V2, the lane change determination function can serve to calculate a distance obtained by multiplying a desired collision margin time (TTC) after the lane change by the relative vehicle speed between the subject vehicle V1 and the front adjacent vehicle V2 as the frontward inter-vehicle distance based on the collision margin time (TTC). The desired collision margin time (TTC) after the lane change can be appropriately set for each vehicle speed, such as by experiments. For example, in the example illustrated in FIG. 5, when the relative vehicle speed between the subject vehicle V1 and the front adjacent vehicle V2 is 10 km/h and the desired collision margin time (TTC) after the lane change is 5 seconds, the lane change determination function can serve to calculate the frontward inter-vehicle distance based on the collision margin time (TTC) as 28 m.

Then, the lane change determination function serves to acquire a longer distance out of the frontward inter-vehicle distance based on the inter-vehicle time (THW) and the frontward inter-vehicle distance based on the collision margin time (TTC) as the frontward inter-vehicle distance D1 after the lane change. For example, in the example illustrated in FIG. 5, the frontward inter-vehicle distance of 33 m based on the inter-vehicle time (THW) is longer than the frontward inter-vehicle distance of 28 m based on the collision margin time (TTC), and the lane change determination function can therefore serve to acquire the frontward inter-vehicle distance D1 after the lane change as 33 m. When the subject vehicle V1 is not approaching the front adjacent vehicle V2, the lane change determination function can serve to calculate the frontward inter-vehicle distance based on the inter-vehicle time (THW) as the frontward inter-vehicle distance D1 after the lane change without calculating the frontward inter-vehicle distance based on the collision margin time (TTC).

In addition or alternatively, the lane change determination function can serve to calculate a distance obtained by multiplying a desired inter-vehicle time (THW) after the lane change by a general vehicle speed of a vehicle traveling in the adjacent lane (details will be described later) as the rearward inter-vehicle distance based on the inter-vehicle time (THW). For example, when the general vehicle speed of a vehicle traveling in the adjacent lane is 70 km/h and the desired inter-vehicle time (THW) after the lane change is 2 seconds, the lane change determination function can serve to calculate the rearward inter-vehicle distance based on the inter-vehicle time (THW) as 39 m. The lane change determination function can serve to acquire the speed limit of the road on which the subject vehicle V1 travels, as the general vehicle speed of a vehicle traveling on the adjacent lane. In addition or alternatively, the lane change determination function can serve to acquire a statistical value of the vehicle speed when a plurality of vehicles traveled in the adjacent lane in past times as the general vehicle speed of a vehicle traveling in the adjacent lane. In such a case, statistical values such as an average value, a median value, and a mode value of the vehicle speed when a plurality of vehicles traveled in the adjacent lane in past times may be preliminarily calculated, for example, in an external server (not illustrated) thereby to allow the lane change determination function to serve to acquire, from the external server, the statistical value of the vehicle speed when a plurality of vehicles traveled in the adjacent lane in past times as the information on the general vehicle speed of a vehicle traveling in the adjacent lane.

In addition, when a rear adjacent vehicle V3 is approaching the subject vehicle VI, the lane change determination function can serve to calculate a distance obtained by multiplying a desired collision margin time (TTC) after the lane change by the relative vehicle speed between the subject vehicle V1 and the rear adjacent vehicle V3 as the rearward inter-vehicle distance based on the collision margin time (TTC). For example, in the example illustrated in FIG. 5, when the relative vehicle speed between the rear adjacent vehicle V3 and the subject vehicle V1 is 10 km/h and the desired collision margin time (TTC) after the lane change is 5 seconds, the lane change determination function can serve to calculate the rearward inter-vehicle distance based on the collision margin time (TTC) as 28 m.

Then, the lane change determination function serves to acquire a longer distance out of the rearward inter-vehicle distance based on the inter-vehicle time (THW) and the rearward inter-vehicle distance based on the collision margin time (TTC) as the rearward inter-vehicle distance D2 after the lane change. For example, in the example illustrated in FIG. 5, the rearward inter-vehicle distance of 39 m based on the inter-vehicle time (THW) is longer than the rearward inter-vehicle distance of 28 m based on the collision margin time (TTC), and the rearward inter-vehicle distance D2 after the lane change can therefore be acquired as 39 m. When the rear adjacent vehicle V3 is not approaching the subject vehicle VI, the lane change determination function can serve to calculate the rearward inter-vehicle distance based on the inter-vehicle time (THW) as the rearward inter-vehicle distance D2 after the lane change without calculating the rearward inter-vehicle distance based on the collision margin time (TTC).

The lane change determination function further serves to set the adjacent lane target region R3 on the adjacent lane on the basis of the frontward inter-vehicle distance D1 after the lane change and the rearward inter-vehicle distance D2 after the lane change. For example, as illustrated in FIG. 5, the lane change determination function can serve to set a specific region of the region on the adjacent lane as the adjacent lane target region R3. The specific region is a region that is defined from a position P2 separated frontward from the front end part of the subject vehicle by the frontward inter-vehicle distance D1 to a position P3 separated rearward from the rear end part of the subject vehicle by the rearward inter-vehicle distance D2. In an alternative embodiment, for example, the lane change determination function can be configured to set a region that is defined from a position separated frontward from the center position of the subject vehicle by the frontward inter-vehicle distance D1 to a position separated rearward from the center position of the subject vehicle by the rearward inter-vehicle distance D2 as the adjacent lane target region R3. In this case, when the frontward inter-vehicle distance D1 is 33 m and the rearward inter-vehicle distance D2 is 39 m, for example, the length of the adjacent lane target region R3 is 72 m.

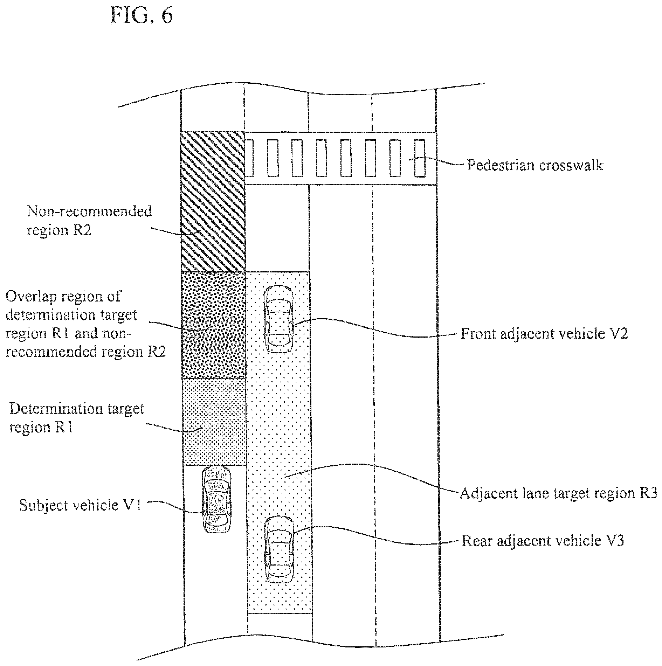

Then, the lane change determination function serves to determine whether or not the subject vehicle can change lanes, on the basis of the determination target region R1, the non-recommended region R2, and the adjacent lane target region R3. Specifically, the lane change determination function serves first to determine whether or not the determination target region R1 includes a part or all of the non-recommended region R2. Then, when the determination target region R1 includes a part or all of the non-recommended region R2, the lane change determination function serves to determine that the subject vehicle cannot change lanes. For example, in the example illustrated in FIG. 6, the determination target region R1 includes a part of the non-recommended region R2 (the determination target region R1 and the non-recommended region R2 partially overlap each other), and the lane change determination function therefore determines that the subject vehicle V1 cannot change lanes.

When the determination target region R1 does not include a part of the non-recommended region R2, the lane change determination function serves to determine whether or not the subject vehicle can change lanes, on the basis of the relationship between the adjacent lane target region R3 and an adjacent vehicle. Specifically, the lane change determination function serves first to determine whether or not an adjacent vehicle is present in the adjacent lane target region R3. When no adjacent vehicle is present in the adjacent lane target region R3, the lane change determination function serves to determine that the subject vehicle can change lanes. On the other hand, when one or more adjacent vehicles are present in the adjacent lane target region R3, the lane change determination function serves further to determine whether or not the subject vehicle V1 can change lanes, on the basis of a front vehicle proximity level $C_{V2}$ of the front adjacent vehicle V2 approaching the subject vehicle V1 and/or a rear vehicle proximity level $C_{V3}$ of the rear adjacent vehicle V3 approaching the subject vehicle V1.

For example, the lane change determination function serves to calculate an inter-vehicle time ($THW_{V2}$) for the subject vehicle V1 to the front adjacent vehicle V2 and a collision margin time ($TTC_{V2}$) for the subject vehicle V1 to the front adjacent vehicle V2. Then, the lane change determination function can serve to calculate the front vehicle proximity level $C_{V2}$ of the front adjacent vehicle V2 approaching the subject vehicle V1 on the basis of the inter-vehicle time ($THW_{V2}$) for the subject vehicle V1 to the front adjacent vehicle V2 and the collision margin time ($TTC_{V2}$) for the subject vehicle V1 to the front adjacent vehicle V2 as represented, for example, by the following equation (1).

$$\text{The front vehicle proximity level } C_{V2} = 1/THW_{V2} + 4/TTC_{V2} \quad \ldots(1)$$

Likewise, the lane change determination function serves to calculate an inter-vehicle time ($THW_{V3}$) for the subject vehicle V1 to the rear adjacent vehicle V3 and a collision margin time ($TTC_{V3}$) for the subject vehicle V1 to the rear adjacent vehicle V3. Then, the lane change determination function can serve to calculate the rear vehicle proximity level $C_{V3}$ of the rear adjacent vehicle V3 approaching the subject vehicle V1 on the basis of the inter-vehicle time ($THW_{V3}$) for the subject vehicle V1 to the rear adjacent vehicle V3 and the collision margin time ($TTC_{V3}$) for the subject vehicle V1 to the rear adjacent vehicle V3 as represented, for example, by the following equation (2).

$$\text{The rear vehicle proximity level } C_{V3} = 1/\text{THW}_{V3} + 4/\text{TTC}_{V3} \quad \ldots(2)$$

For example, in a case in which the rear adjacent vehicle V3 is approaching the subject vehicle V1 from behind, when the inter-vehicle time ($\text{THW}_{V3}$) for the subject vehicle V1 to the rear adjacent vehicle V3 is 2 seconds and the collision margin time ($\text{TTC}_{V3}$) for the subject vehicle V1 to the rear adjacent vehicle V3 is 5 seconds, the lane change determination function can serve to obtain the rear vehicle proximity level $C_{V3}$ of the rear adjacent vehicle V3 approaching the subject vehicle V1 as 1.3 from the above equation (2).

Then, when the front vehicle proximity level $C_{V2}$ of the front adjacent vehicle V2 approaching the subject vehicle V1 and the rear vehicle proximity level $C_{V3}$ of the rear adjacent vehicle V3 approaching the subject vehicle V1 are lower than respective predetermined thresholds, the lane change determination function serves to determine that the subject vehicle V1 can change lanes. On the other hand, when the front vehicle proximity level $C_{V2}$ or the rear vehicle proximity level $C_{V3}$ is not lower than the corresponding predetermined threshold, the lane change determination function serves to determine that the subject vehicle V1 cannot change lanes. The threshold of the front vehicle proximity level $C_{V2}$ and the threshold of the rear vehicle proximity level $C_{V3}$ are not particularly limited and can be appropriately set. The threshold of the front vehicle proximity level $C_{V2}$ and the threshold of the rear vehicle proximity level $C_{V3}$ may be the same value or may also be different values.

The travel control function of the control device 150 serves to control the automated travel of the subject vehicle. For example, the travel control function can serve to control the operation of the drive mechanism 140 such as the steering actuator so that the subject vehicle travels in the subject lane, thereby to perform the lane keeping control of controlling the traveling position of the subject vehicle in the road width direction. In addition or alternatively, the travel control function can serve to control the operation of the drive mechanism 140, such as the engine and/or brake, thereby to perform the constant-speed travel control in which the subject vehicle is controlled to travel at a certain vehicle speed that is set by the driver. In addition or alternatively, when a preceding vehicle is present, the travel control function can serve to control the operation of the drive mechanism 140, such as the engine and/or brake, thereby to perform the follow-up travel control in which the subject vehicle is controlled to follow the preceding vehicle with a certain inter-vehicle distance that is set by the driver. In addition, in the present embodiment, the travel control function can serve to control the operation of the drive mechanism 140, such as the engine, brake, and steering actuator, thereby to perform the lane change control in which the subject vehicle is controlled to automatically change lanes. In the present embodiment, the travel control function serves to determine whether or not to perform the lane change control, on the basis of the determination result made by the lane change determination function as to whether or not a lane change is possible.

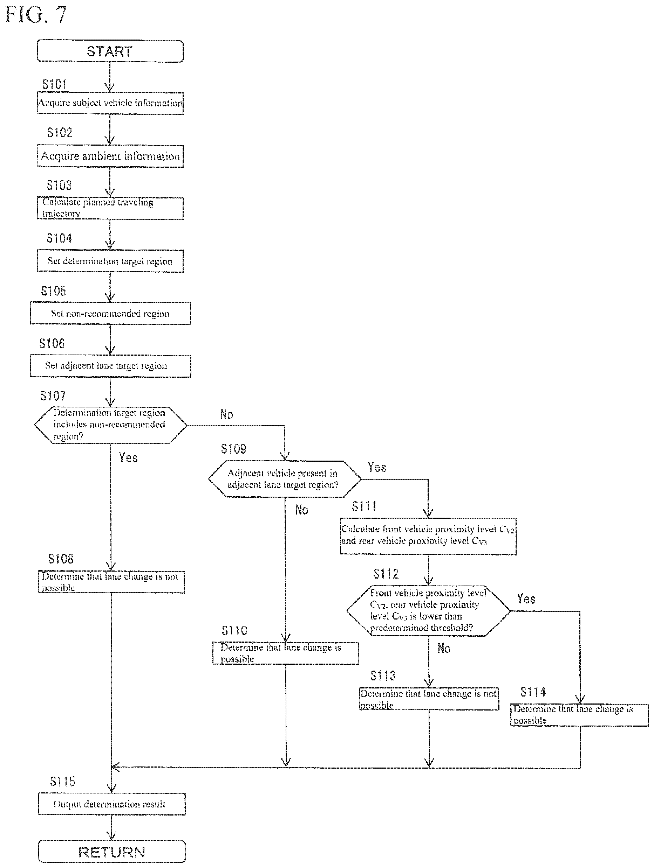

With reference to FIG. 7, a lane change assistance process according to the first embodiment will then be described. FIG. 7 is a flowchart illustrating the lane change assistance process according to the first embodiment. The lane change assistance process described below is executed by the control device 150. The lane change assistance process described below is started when the ignition is turned on, and repeatedly performed until the ignition is turned off.

In step S101, the subject vehicle information acquisition function of the control device 150 serves first to acquire the subject vehicle information. For example, the vehicle information acquisition function can serve to acquire the positional information of the subject vehicle as the subject vehicle information from the GPS device included in the set of sensors 110 and can also serve to acquire the vehicle speed information of the subject vehicle as the subject vehicle information from the vehicle speed sensor included in the set of sensors 110.

In step S102, the ambient information acquisition function of the control device 150 serves to acquire the ambient information. For example, the ambient information acquisition function can serve to acquire the road information of the roads around the subject vehicle as the ambient information from the map database 120 or can also acquire the road information of the roads around the subject vehicle and the information on the obstacles present around the subject vehicle as the ambient information from the camera and/or ranging sensor included in the set of sensors 110.

In step S103, as illustrated in FIG. 2, the lane change determination function of the control device 150 serves to calculate the planned traveling trajectory when the subject vehicle changes lanes. In particular, in the present embodiment, the lane change determination function serves to calculate a smooth planned traveling trajectory in accordance with the vehicle speed of the subject vehicle V1 such that the occupants of the subject vehicle V1 do not feel uncomfortable and/or uneasy as the subject vehicle V1 turns abruptly.

In step S104, the lane change determination function of the control device 150 serves to set the determination target region R1. In the present embodiment, the lane change determination function serves to calculate the travel distance required for the subject vehicle V1 to change lanes, on the basis of the positional information and vehicle speed information of the subject vehicle V1 acquired in step S101 and/or the planned traveling trajectory calculated in step S103. Then, as illustrated in FIG. 3, the lane change determination function can serve to set a specific region of the region on the subject lane as the determination target region R1. The specific region is a region that is located ahead of the subject vehicle V1 and defined from the position of the subject vehicle V1 to the travel distance required for the subject vehicle V1 to change lanes.

In step S105, the lane change determination function serves to set the non-recommended region R2. Specifically, as illustrated in FIG. 4, the lane change determination function can serve to set a region in which a lane change is not recommended, such as a region in which a lane change is prohibited by the traffic rules or the like, as the non-recommended region R2 on the basis of the road information acquired in step S102.

In step S106, the lane change determination function serves to set the adjacent lane target region R3. For example, the lane change determination function can serve to calculate the frontward inter-vehicle distance D1 and the rearward inter-vehicle distance D2, which are distances after the lane change, and set a specific region of the region on the adjacent lane as the adjacent lane target region R3. The specific region is a region that is defined from the position P2 separated frontward from the subject vehicle by the frontward inter-vehicle distance D1 to the position P3 separated rearward from the subject vehicle by the rearward inter-vehicle distance D2.

In step S107, the lane change determination function serves to determine whether or not a lane change is possible, on the basis of the determination target region R1 which is set in step S104 and the non-recommended region R2 which is set in step S105. Specifically, the lane change determination function serves to determine whether or not the determination target region R1 includes a part or all of the non-recommended region R2. Then, when the determination target region R1 includes a part or all of the non-recommended region R2, the process proceeds to step S108. In step S108, the lane change determination function serves to determine that the subject vehicle V1 cannot change lanes. On the other hand, when a determination is made in step S107 that the determination target region R1 does not include a part or all of the non-recommended region R2, the process proceeds to step S109.

In step S109, the lane change determination function serves to determine whether or not an adjacent vehicle is present in the adjacent lane target region R3. When a determination is made that no adjacent vehicle is present in the adjacent lane target region R3, the process proceeds to step S110. In step S110, the lane change determination function serves to determine that the subject vehicle can change lanes. On the other hand, when one or more adjacent vehicles are present in the adjacent lane target region R3, the process proceeds to step S111.

In step S111, the lane change determination function serves to calculate the front vehicle proximity level $C_{V2}$, which represents a proximity level of the front adjacent vehicle V2 approaching the subject vehicle V1, and the rear vehicle proximity level $C_{V3}$, which represents a proximity level of the rear adjacent vehicle V3 approaching the subject vehicle V1. For example, the lane change determination function can serve to calculate the front vehicle proximity level $C_{V2}$ and the rear vehicle proximity level $C_{V3}$ on the basis of the above equations (1) and (2).

Then, in step S112, the lane change determination function serves to determine whether or not the front vehicle proximity level $C_{V2}$ and rear vehicle proximity level $C_{V3}$ calculated in step S111 are lower than respective predetermined thresholds. When the front vehicle proximity level $C_{V2}$ or the rear vehicle proximity level $C_{V3}$ is not lower than the corresponding predetermined threshold, the process proceeds to step S113. In step S113, the lane change determination function serves to determine that the subject vehicle V1 cannot change lanes. On the other hand, when the front vehicle proximity level $C_{V2}$ and the rear vehicle proximity level $C_{V3}$ are lower than the respective predetermined thresholds, the process proceeds to step S114. In step S114, the lane change determination function serves to determine that the subject vehicle V1 can change lanes.

In step S115, the lane change determination function serves to output the determination result for a lane change made in step S108, S110, S113, or S114. For example, the lane change determination function can serve to output a determination result that a lane change cannot be performed to the presentation device 130 thereby to allow the presentation device 130 to notify that a lane change cannot be performed. When the travel control apparatus 100 performs the lane change control, the determination result as to whether or not a lane change is possible can be output thereby to allow the travel control apparatus 100 to appropriately perform the lane change of the subject vehicle.

As described above, in the present embodiment, the non-recommended region R2 in which a lane change is not recommended is identified on the basis of the road information of the roads around the subject vehicle V1, and the determination target region R1 for determining whether or not the subject vehicle V1 can change lanes is set on the basis of the positional information and vehicle speed information of the subject vehicle V1. Then, when the determination target region R1 includes a part or all of the non-recommended region R2, a determination is made that the subject vehicle V1 cannot change lanes. Through this operation, in the present embodiment, a determination can be made that a lane change cannot be performed in a region in which a lane change is not recommended, such as a region in which a lane change is prohibited by the traffic rules, and a determination can therefore be appropriately made that the subject vehicle V1 can change lanes.

Moreover, in the present embodiment, the travel distance required for the subject vehicle to change lanes is estimated on the basis of the vehicle speed of the subject vehicle, and a region that is included in the region on the subject lane and corresponds to the travel distance required for the subject vehicle to change lanes is set as the determination target region R1. Through this operation, in the present embodiment, the region in which the subject vehicle changes lanes can be appropriately set as the determination target region R1. As a result, a determination can be appropriately made as to whether or not the subject vehicle can change lanes.

Furthermore, in the present embodiment, when the determination target region R1 does not include a part or all of the non-recommended region R2, the adjacent lane target region R3 is set in the adjacent lane. Then, a determination is made as to whether or not an adjacent vehicle is present in the adjacent lane target region R3. When no adjacent vehicle is present in the adjacent lane target region R3, a determination is made that the subject vehicle can change lanes. On the other hand, when one or more adjacent vehicles are present in the adjacent lane target region R3, the front vehicle proximity level $C_{V2}$ of the front adjacent vehicle V2 approaching the subject vehicle V1 and the rear vehicle proximity level $C_{V3}$ of the rear adjacent vehicle V3 approaching the subject vehicle V1 are calculated. Then, when the front vehicle proximity level $C_{V2}$ or the rear vehicle proximity level $C_{V3}$ is not lower than the corresponding predetermined threshold, a determination is made that the subject vehicle cannot change lanes, while when the front vehicle proximity level $C_{V2}$ and the rear vehicle proximity level $C_{V3}$ are lower than the respective predetermined thresholds, a determination is made that the subject vehicle can change lanes. Here, the front vehicle proximity level $C_{V2}$ can be used as an index of the degree which the driver of the subject vehicle V1 feels that the front adjacent vehicle V2 is approaching the subject vehicle V1. The rear vehicle proximity level $C_{V3}$ can be used as an index of the degree which the driver of the subject vehicle V1 feels that the rear adjacent vehicle V3 is approaching the subject vehicle V1. Accordingly, when the front vehicle proximity level $C_{V2}$ or the rear vehicle proximity level $C_{V3}$ is not lower than the corresponding predetermined threshold, a determination is made that the subject vehicle cannot change lanes, and it is thereby possible to effectively prevent the driver of the subject vehicle V1 from feeling uneasy due to the front adjacent vehicle V2 or the rear adjacent vehicle V3 approaching the subject vehicle V1 upon the lane change of the subject vehicle V1.

«Second Embodiment»

Next, the travel control apparatus according to a second embodiment will be described. The travel control apparatus 100 according to the second embodiment has the same configuration as that of the travel control device 100 of the first embodiment and is the same as in the first embodiment except that the travel control apparatus 100 operates as described below.

In the second embodiment, the lane change determination function of the control device 150 serves to estimate the vehicle speed of the subject vehicle when traveling on a road lying ahead of the subject vehicle, on the basis of the road shape of the road lying ahead of the subject vehicle, and set the determination target region R1 on the basis of the estimated vehicle speed of the subject vehicle.

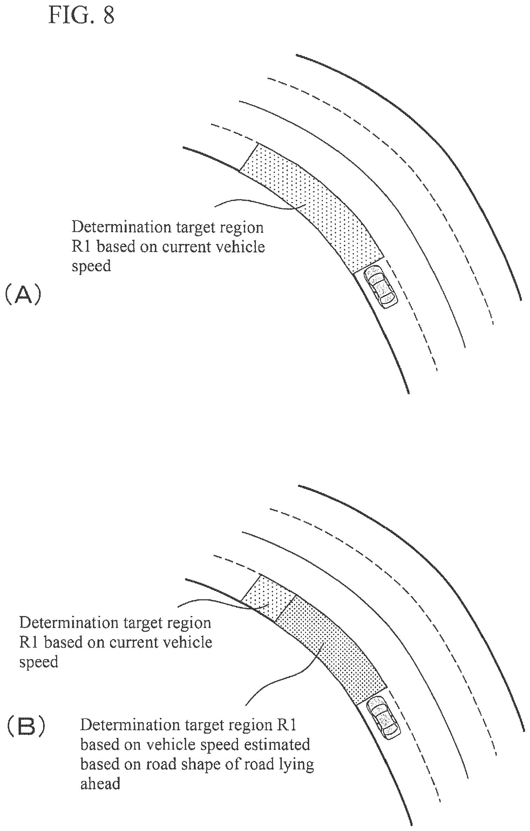

FIG. 8 is a set of diagrams for describing a method of setting the determination target region R1 according to the second embodiment. In the example illustrated in FIG. 8, a scene is exemplified in which the subject vehicle travels on a straight road at a speed of 60 km/h and then enters a curve. For example, in a case in which the determination target region R1 is set before the subject vehicle enters the curve on the basis of a speed of 60 km/h that is the vehicle speed of the subject vehicle before entering the curve (i.e. the vehicle speed of the subject vehicle at the time of traveling straight ahead), when the time required for a lane change is 3 seconds, as illustrated in FIG. 8(A), the lane change determination function may serve to set a region from the subject vehicle V1 to a distance of 50 m as the determination target region R1.

In contrast, in the second embodiment, before the subject vehicle V1 enters the curve, the lane change determination function serves to estimate the vehicle speed of the subject vehicle V1 when traveling through the curve and set the determination target region R1 on the basis of the estimated vehicle speed of the subject vehicle V1. For example, in a case in which it is estimated that the subject vehicle V1 reduces its vehicle speed to 50 km/h in order to enter the curve, when the time required for a lane change is 3 seconds, the lane change determination function can serve to set a region from the subject vehicle V1 to a distance of 42 m as the determination target region R1. The method of estimating the vehicle speed of the subject vehicle on a road lying ahead of the subject vehicle is not particularly limited, and any well-known method can be used.

In the second embodiment, when determining whether or not the subject vehicle can change lanes on the basis of the adjacent lane target region R3 and adjacent vehicles, the lane change determination function serves to calculate a subject vehicle proximity level $C_{V1}$ of the subject vehicle V1 approaching the rear adjacent vehicle V3 in addition to the front vehicle proximity level $C_{V2}$ of the front adjacent vehicle V2 approaching the subject vehicle V1 and the rear vehicle proximity level $C_{V3}$ of the rear adjacent vehicle V3 approaching the subject vehicle V1.

Specifically, the lane change determination function serves first to calculate an inter-vehicle time ($THW_{V1}$) and a collision margin time ($TTC_{V1}$) for the rear adjacent vehicle V3 to the subject vehicle V1. The inter-vehicle time ($THW_{V1}$) for the rear adjacent vehicle V3 to the subject vehicle V1 can be obtained by dividing the relative distance between the subject vehicle V1 and the rear adjacent vehicle V3 by the vehicle speed of the rear adjacent vehicle V3. The collision margin time ($TTC_{V1}$) for the rear adjacent vehicle V3 to the subject vehicle V1 can be obtained by dividing the relative distance between the subject vehicle V1 and the rear adjacent vehicle V3 by the difference between the vehicle speed of the subject vehicle V1 and the vehicle speed of the rear adjacent vehicle V3. Then, the lane change determination function serves to calculate the subject vehicle proximity level $C_{V1}$ of the subject vehicle V1 approaching the rear adjacent vehicle V3 on the basis of the inter-vehicle time ($THW_{V1}$) and collision margin time ($TTC_{V1}$) for the rear adjacent vehicle V3 as represented by the following equation (3).

$$\text{The subject vehicle proximity level } C_{V1} = 1/THW_{V1} + 4/TTC_{V1} \quad \ldots(3)$$

Then, in the second embodiment, when the front vehicle proximity level $C_{V2}$ and the rear vehicle proximity level $C_{V3}$ are lower than respective predetermined thresholds, the lane change determination function serves to determine whether or not the subject vehicle proximity level $C_{V1}$ of the subject vehicle V1 approaching the rear adjacent vehicle V3 is lower than a predetermined threshold. When the subject vehicle proximity level $C_{V1}$ is not lower than the predetermined threshold, the lane change determination function serves to determine that the subject vehicle V1 cannot change lanes, while when the subject vehicle proximity level $C_{V1}$ is lower than the predetermined threshold, the lane change determination function serves to determine that the subject vehicle V1 can change lanes. The threshold of the subject vehicle proximity level $C_{V1}$ is not particularly limited and can be appropriately set. The threshold of the subject vehicle proximity level $C_{V1}$ may be a different value from the threshold of the front vehicle proximity level $C_{V2}$ or the threshold of the rear vehicle proximity level $C_{V3}$ or may also be the same value as the threshold of the front vehicle proximity level $C_{V2}$ or the threshold of the rear vehicle proximity level $C_{V3}$.

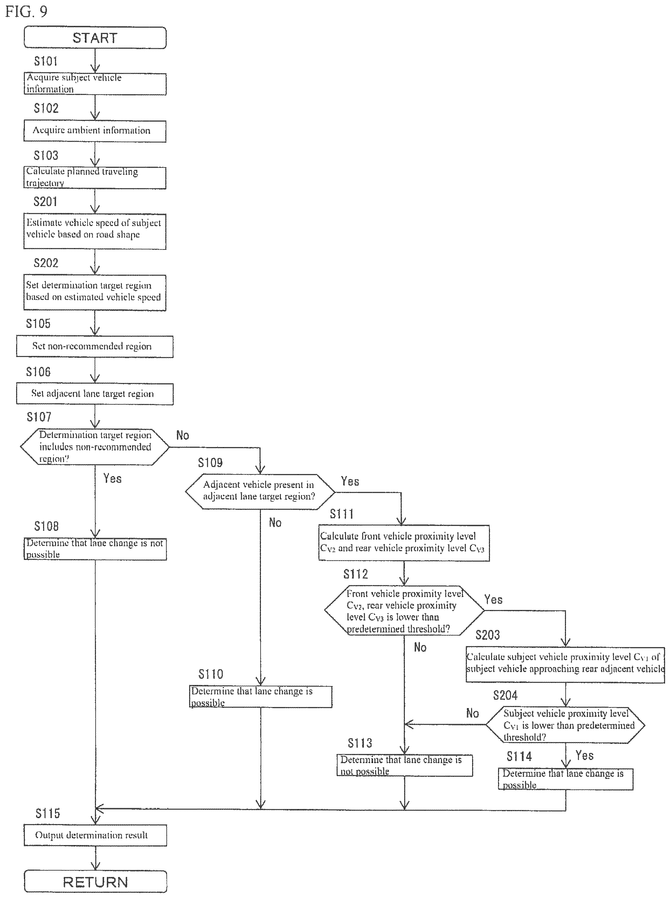

With reference to FIG. 9, a lane change assistance process according to the second embodiment will then be described. FIG. 9 is a flowchart illustrating the lane change assistance process according to the second embodiment. As in the first embodiment, the lane change assistance process according to the second embodiment is started when the ignition is turned on, and repeatedly performed until the ignition is turned off.

In steps S101 to S103, as in the first embodiment, the subject vehicle information and the ambient information are acquired (steps S101 and S102) and the planned traveling trajectory when the subject vehicle changes lanes is calculated (step S103). Step S103 is followed by step S201, in which the lane change determination function of the control device 150 serves to estimate the vehicle speed of the subject vehicle when traveling on a road lying ahead of the subject vehicle, on the basis of the road shape of the road lying ahead of the subject vehicle. The road shape of the road lying ahead of the subject vehicle is included in the ambient information acquired in step S102. Then, in step S202, the lane change determination function serves to set the determination target region R1 on the basis of the vehicle speed, estimated in step S201, of the subject vehicle on the road lying ahead of the subject vehicle. Through this operation, as illustrated in FIG. 8(B), for example, when the subject vehicle V1 is to encounter the curve ahead of the subject vehicle V1, the determination target region R1 can be calculated on the basis of the vehicle speed of the subject vehicle V1 when traveling through the curve.

In steps S105 to S112, the process is executed as in the first embodiment. That is, after the non-recommended region R2 and the adjacent lane target region R3 are set (steps S105 and S106), a determination is made as to whether or not the determination target region R1 set in step S202 includes a part or all of the non-recommended region R2 (step S107). Then, when the determination target region R1 includes a part or all of the non-recommended region R2, a determination is made that the subject vehicle cannot change lanes (step S108), while when a determination is made that the determination target region R1 does not include a part or all of the non-recommended region R2, a determination is made as to whether or not an adjacent vehicle is present in the adjacent lane target region R3 (step S109). When no adjacent vehicle is present in the adjacent lane target region R3, a determination is made that the subject vehicle can change lanes (step S110). On the other hand, when one or more adjacent vehicles are present in the adjacent lane target region R3, the front vehicle proximity level $C_{V2}$ and the rear vehicle proximity level $C_{V3}$ are calculated (step S111) and a determination is made as to whether or not the front vehicle proximity level $C_{V2}$ and the rear vehicle proximity level $C_{V3}$ are lower than respective predetermined thresholds (step S112). When the front vehicle proximity level $C_{V2}$ or the rear vehicle proximity level $C_{V3}$ is not lower than the corresponding predetermined threshold, a determination is made that the subject vehicle cannot change lanes (step S113). On the other hand, when the front vehicle proximity level $C_{V2}$ and the rear vehicle proximity level $C_{V3}$ are lower than the respective predetermined thresholds, the process proceeds to step S203.

In step S203, the lane change determination function serves to calculate a proximity level of the subject vehicle V1 approaching the rear adjacent vehicle V3 as the subject vehicle proximity level $C_{V1}$. For example, the lane change determination function can serve to calculate the subject vehicle proximity level $C_{V1}$ of the subject vehicle V1 approaching the rear adjacent vehicle V3 on the basis of the inter-vehicle time ($THW_{V1}$) for the rear adjacent vehicle V3 to the subject vehicle V1 and the collision margin time ($TTC_{V1}$) for the rear adjacent vehicle V3 to the subject vehicle V1 as represented by the above equation (3).

Then, in step S204, the lane change determination function serves to determine whether or not the subject vehicle proximity level $C_{V1}$ calculated in step S203 is lower than a predetermined threshold. When the subject vehicle proximity level $C_{V1}$ is lower than the predetermined threshold, the process proceeds to step S114, in which the lane change determination function serves to determine that the subject vehicle V1 can change lanes. When the subject vehicle proximity level $C_{V1}$ is not lower than the predetermined threshold, the process proceeds to step S113, in which the lane change determination function serves to determine that the subject vehicle V1 cannot change lanes.

As described above, in the second embodiment, the vehicle speed of the subject vehicle when traveling on the road lying ahead of the subject vehicle is estimated on the basis of the road shape of the road lying ahead of the subject vehicle, and the determination target region R1 is set on the basis of the estimated vehicle speed. Through this operation, in the second embodiment, a determination as to whether or not the subject vehicle V1 can change lanes can be appropriately made on the basis of the road shape of the road when the subject vehicle V1 changes lanes.

Moreover, in the second embodiment, in addition to the front vehicle proximity level $C_{V2}$ and the rear vehicle proximity level $C_{V3}$, the subject vehicle proximity level $C_{V1}$ of the subject vehicle V1 approaching the rear adjacent vehicle V3 is calculated. Then, in addition to the determination as to whether or not the front vehicle proximity level $C_{V2}$ and the rear vehicle proximity level $C_{V3}$ are lower than respective predetermined thresholds, a determination is made as to whether or not the subject vehicle proximity level $C_{V1}$ is lower than a predetermined threshold. When the subject vehicle proximity level $C_{V1}$ is lower than the predetermined threshold, a determination is made that the subject vehicle V1 can change lanes, while when the subject vehicle proximity level $C_{V1}$ is not lower than the predetermined threshold, a determination is made that the subject vehicle V1 cannot change lanes. Here, the subject vehicle proximity level $C_{V1}$ can be used as an index of the degree which the driver of the rear adjacent vehicle V3 feels that the subject vehicle V1 is approaching the rear adjacent vehicle V3. Accordingly, when the subject vehicle proximity level $C_{V1}$ is high, the driver of the rear adjacent vehicle V3 may feel that the subject vehicle V1 is approaching the rear adjacent vehicle V3, and the driver of the rear adjacent vehicle V3 may possibly disturb the traffic flow of the adjacent lane, such as by putting on the brake. In the second embodiment, therefore, when the subject vehicle proximity level $C_{V1}$ is not lower than a predetermined threshold, a determination is made that the subject vehicle V1 cannot change lanes, and it is thereby possible to effectively prevent the driver of the rear adjacent vehicle V3 from disturbing the traffic flow of the adjacent lane, such as by putting on the brake.

Embodiments heretofore explained are described to facilitate understanding of the present invention and are not described to limit the present invention. It is therefore intended that the elements disclosed in the above embodiments include all design changes and equivalents to fall within the technical scope of the present invention.

For example, in the above-described embodiments, a configuration is exemplified in which the non-recommended region R2 is set on the basis of the road information stored in the map database 120, but the present invention is not limited to this configuration, and another configuration may also be employed. For example, probe information may be collected from a plurality of vehicles or accident information of a plurality of vehicles may be preliminarily stored in a database. Such information may be analyzed to preliminarily store a region in which a lane change is not recommended as the non-recommended region R2 in the database. This allows the control device 150 to acquire the non-recommended region R2 around the subject vehicle from the above database.

In the above-described embodiments, a configuration is exemplified in which, when the determination target region R1 includes a part or all of the non-recommended region R2, a determination is made that the subject vehicle V1 cannot change lanes, but the present invention is not limited to this configuration, and another configuration may also be employed in which, for example, a frame surrounding the determination target region R1 is set as a determination target frame, a frame surrounding the non-recommended region R2 is set as a non-recommended frame, and when the determination target frame and the non-recommended frame interfere with each other, a determination is made that the subject vehicle V1 cannot change lanes. In this case, a modified configuration may be employed in which, when the determination target frame and the non-recommended frame do not interfere with each other, a frame surrounding the adjacent lane target region R3 is set as an adjacent lane target frame, and a determination is made as to whether or not the subject vehicle V1 can change lanes, on the basis of an adjacent vehicle present in the adjacent lane target frame.

In the above-described embodiments, a configuration is exemplified in which the frontward inter-vehicle distance D1 and the rearward inter-vehicle distance D2 are calculated to set the adjacent lane target region R3 on the basis of the inter-vehicle time (THW) and the collision margin time (TTC), but the present invention is not limited to this configuration, and another configuration can also be employed in which, for example, the lane change determination function serves to preliminarily determine the frontward inter-vehicle distance D1 and rearward inter-vehicle distance D2 for each vehicle speed and set the adjacent lane target region R3 on the basis of the frontward inter-vehicle distance D1 and rearward inter-vehicle distance D2 corresponding to the vehicle speed of the subject vehicle. In addition or alternatively, the lane change determination function can be configured to determine the frontward inter-vehicle distance D1 and the rearward inter-vehicle distance D2 on the basis of the front adjacent vehicle V2 and the rear adjacent vehicle V3 which travel at distances closest to the subject vehicle V1. For example, the lane change determination function can be configured to increase the frontward inter-vehicle distance D1 or the rearward inter-vehicle distance D2 as the size of the front adjacent vehicle V2 or the rear adjacent vehicle V3 is larger. In addition or alternatively, the lane change determination function can be configured to increase the frontward inter-vehicle distance D1 or the rearward inter-vehicle distance D2 as the front adjacent vehicle V2 or the rear adjacent vehicle V3 is closer to the subject vehicle or as the vehicle speed of the front adjacent vehicle V2 is slower or the vehicle speed of the rear adjacent vehicle V3 is higher. In addition or alternatively, the lane change determination function can be configured to set the length of the adjacent lane target region R3 on the basis of the road shape of the road lying ahead of the subject vehicle V1 as in the case of the determination target region R1 in the second embodiment.

In the above-described embodiments, a configuration is exemplified in which the vehicle speed of a general vehicle in the adjacent lane is acquired as the vehicle speed of the rear adjacent vehicle V3 thereby to calculate the rearward inter-vehicle distance based on the inter-vehicle time (THW), but the present invention is not limited to this configuration, and another configuration can also be employed in which, for example, the absolute vehicle speed of the rear adjacent vehicle V3 is calculated and the rearward inter-vehicle distance based on the inter-vehicle time (THW) is calculated on the basis of the absolute vehicle speed of the rear adjacent vehicle V3.

The control device 150 according to the above-described embodiments corresponds to the controller in the present invention.

[Description of Reference Numerals]

100    Travel control apparatus
110    Set of sensors
120    Map database
130    Presentation device
140    Drive mechanism
150    Control device

**Claims**

**1.** A lane change assistance method comprising:

identifying a non-recommended region in which a lane change is not recommended, on a basis of road information of a road on which a subject vehicle travels;
setting a region required for the subject vehicle to change lanes as a determination target region on a basis of positional information and vehicle speed information of the subject vehicle; and
when the determination target region includes a part or all of the non-recommended region, making a determination that the subject vehicle cannot change lanes and outputting a result of the determination.

**2.** The lane change assistance method according to claim 1, comprising:

calculating a travel distance required for the subject vehicle to change lanes, on the basis of the positional information and vehicle speed information of the subject vehicle; and
setting a region corresponding to the travel distance in a region on a lane in which the subject vehicle travels, as the determination target region.

**3.** The lane change assistance method according to claim 1 or 2, comprising:

estimating a vehicle speed of the subject vehicle when traveling on the road lying ahead of the subject vehicle, on a basis of a road shape of the road lying ahead of the subject vehicle; and
setting the determination target region on a basis of the estimated vehicle speed of the subject vehicle.

**4.** The lane change assistance method according to any one of claims 1 to 3, comprising:

setting an adjacent lane target region in an adjacent lane to a lane in which the subject vehicle travels; and
when the determination target region does not include the non-recommended region, making a determination as to whether or not the subject vehicle can change lanes, on a basis of the adjacent lane target region and an adjacent vehicle traveling in the adjacent lane.

**5.** The lane change assistance method according to claim 4, comprising:

when the adjacent vehicle is present in the adjacent lane target region, calculating a proximity level of the adjacent vehicle approaching the subject vehicle as an adjacent vehicle proximity level;
when the adjacent vehicle proximity level is not lower than a predetermined threshold, making a determination that the subject vehicle cannot change lanes; and
when the adjacent vehicle proximity level is lower than the predetermined threshold, making a determination that the subject vehicle can change lanes.

**6.** The lane change assistance method according to claim 4 or 5, comprising:

when the adjacent vehicle is present in the adjacent lane target region, calculating a proximity level of the subject vehicle approaching the adjacent vehicle as a subject vehicle proximity level;
when the subject vehicle proximity level is not lower than a predetermined threshold, making a determination that the subject vehicle cannot change lanes; and
when the subject vehicle proximity level is lower than the predetermined threshold, making a determination that the subject vehicle can change lanes.

**7.** A lane change assistance apparatus comprising a controller configured to make a determination as to whether or not a subject vehicle can change lanes,
the controller being further configured to:

identify a non-recommended region in which a lane change is not recommended, on a basis of road information of a road on which the subject vehicle travels;
set a region required for the subject vehicle to change lanes as a determination target region on a basis of positional information and vehicle speed information of the subject vehicle; and
when the determination target region includes a part or all of the non-recommended region, make a determination that the subject vehicle cannot change lanes and output a result of the determination.

**Amended claims under Art. 19.1 PCT**

**1.** (Amended) A lane change assistance method comprising:

identifying a non-recommended region in which a lane change is not recommended, on a basis of road information of a road on which a subject vehicle travels;
calculating a travel distance required for the subject vehicle to change lanes, on the basis of the positional information and vehicle speed information of the subject vehicle; and setting a region corresponding to the travel distance in a region on a lane in which the subject vehicle travels, as the determination target region; or
estimating a vehicle speed of the subject vehicle when traveling on the road lying ahead of the subject vehicle, on a basis of a road shape of the road lying ahead of the subject vehicle; and setting the determination target region on a basis of the estimated vehicle speed of the subject vehicle; and
when the determination target region includes a part or all of the non-recommended region, making a determination that the subject vehicle cannot change lanes and outputting a result of the determination.

**2.** (Canceled)

**3.** (Canceled)

**4.** (Amended) The lane change assistance method according to claim 1, comprising:

setting an adjacent lane target region in an adjacent lane to a lane in which the subject vehicle travels; and
when the determination target region does not include the non-recommended region, making a determination as to whether or not the subject vehicle can change lanes, on a basis of the adjacent lane target region and an adjacent vehicle traveling in the adjacent lane.

**5.** The lane change assistance method according to claim 4, comprising:

when the adjacent vehicle is present in the adjacent lane target region, calculating a proximity level of the adjacent vehicle approaching the subject vehicle as an adjacent vehicle proximity level;
when the adjacent vehicle proximity level is not lower than a predetermined threshold, making a determination that the subject vehicle cannot change lanes; and
when the adjacent vehicle proximity level is lower than the predetermined threshold, making a determination that the subject vehicle can change lanes.

**6.** The lane change assistance method according to claim 4 or 5, comprising:

when the adjacent vehicle is present in the adjacent lane target region, calculating a proximity level of the subject vehicle approaching the adjacent vehicle as a subject vehicle proximity level;
when the subject vehicle proximity level is not lower than a predetermined threshold, making a determination that the subject vehicle cannot change lanes; and
when the subject vehicle proximity level is lower than the predetermined threshold, making a determination that the subject vehicle can change lanes.

**7.** (Amended) A lane change assistance apparatus comprising a controller configured to make a determination as to whether or not a subject vehicle can change lanes,
the controller being further configured to:

identify a non-recommended region in which a lane change is not recommended, on a basis of road information of a road on which the subject vehicle travels;
calculate a travel distance required for the subject vehicle to change lanes, on the basis of the positional information and vehicle speed information of the subject vehicle; and set a region corresponding to the travel distance in a region on a lane in which the subject vehicle travels, as the determination target region; or
estimate a vehicle speed of the subject vehicle when traveling on the road lying ahead of the subject vehicle, on a basis of a road shape of the road lying ahead of the subject vehicle; and set the determination target region on a basis of the estimated vehicle speed of the subject vehicle; and
when the determination target region includes a part or all of the non-recommended region, make a determination that the subject vehicle cannot change lanes and output a result of the determination.

**Statement under Art. 19.1 PCT**

The Applicant has amended the claims 1 and 7 by adding on of the subject matter of the claims 2 and 3. The International Searching Authority reported that each invention in claims 2 and 3 which refer to claim 1 is novel and involves an inventive step with respect to each of the documents cited in the international search report.

There is no description the feature 'calculating a travel distance required for the subject vehicle to change lanes, on the basis of the positional information and vehicle speed information of the subject vehicle; and setting a region corresponding to the travel distance in a region on a lane in which the subject vehicle travels, as the determination target region' and the feature 'estimating a vehicle speed of the subject vehicle when traveling on the road lying ahead of the subject vehicle, on a basis of a road shape of the road lying ahead of the subject vehicle; and setting the determination target region on a basis of the estimated vehicle speed of the subject vehicle' in both of the cited documents 1 and 2.

The Applicant has amended the claim 4 by adjusting the reference number of claim because claims 2 and 3 are canceled.

FIG. 1

```
┌─────────────────────────────────────────────────────────────────┐
│                   Travel control apparatus (100)                  │
│                                                                   │
│  ┌──────────────────┐       ┌──────────────┐   ┌──────────────┐   │
│  │ Set of sensors   │──────▶│              │──▶│ Presentation │   │
│  │ (110)            │       │              │   │ device (130) │   │
│  └──────────────────┘       │              │   └──────────────┘   │
│                             │ Control      │                      │
│  ┌──────────────────┐       │ device (150) │   ┌──────────────┐   │
│  │                  │       │              │   │ Drive        │   │
│  │ Map database     │──────▶│              │──▶│ mechanism    │   │
│  │ (120)            │       │              │   │ (140)        │   │
│  └──────────────────┘       └──────────────┘   └──────────────┘   │
│                                                                   │
└─────────────────────────────────────────────────────────────────┘
```

FIG. 2

Pedestrian crosswalk

Target position P1

Front adjacent vehicle V2

Planned traveling trajectory when changing lanes

Subject vehicle V1

Rear adjacent vehicle V3

# FIG. 3

Pedestrian crosswalk

Target position P1

Determination target region R1

Front adjacent vehicle V2

Planned traveling trajectory when changing lanes

Subject vehicle V1

Rear adjacent vehicle V3

FIG. 4

Pedestrian crosswalk

Non-recommended
region R2

Front adjacent vehicle V2

Subject vehicle V1

Rear adjacent vehicle V3

FIG. 5

Pedestrian crosswalk

Frontward inter-vehicle distance D1

P2

Front adjacent vehicle V2

Subject vehicle V1

Adjacent lane target region R3

Rear adjacent vehicle V3

Rearward inter-vehicle distance D2

P3

FIG. 6

Pedestrian crosswalk

Non-recommended region R2

Overlap region of determination target region R1 and non-recommended region R2

Front adjacent vehicle V2

Determination target region R1

Adjacent lane target region R3

Subject vehicle V1

Rear adjacent vehicle V3

FIG. 7

```
                    ┌─────────────────┐
                    │      START      │
                    └─────────────────┘
                             │
S101                         ▼
    ┌────────────────────────────────────┐
    │ Acquire subject vehicle information │
    └────────────────────────────────────┘
                             │
S102                         ▼
    ┌────────────────────────────────────┐
    │      Acquire ambient information    │
    └────────────────────────────────────┘
                             │
S103                         ▼
    ┌────────────────────────────────────┐
    │  Calculate planned traveling        │
    │  trajectory                         │
    └────────────────────────────────────┘
                             │
S104                         ▼
    ┌────────────────────────────────────┐
    │    Set determination target region  │
    └────────────────────────────────────┘
                             │
S105                         ▼
    ┌────────────────────────────────────┐
    │      Set non-recommended region     │
    └────────────────────────────────────┘
                             │
S106                         ▼
    ┌────────────────────────────────────┐
    │    Set adjacent lane target region  │
    └────────────────────────────────────┘
                             │
S107                         ▼
```

S107 — Determination target region includes non-recommended region?  — No

S109 — Adjacent vehicle present in adjacent lane target region? — Yes

S111 — Calculate front vehicle proximity level $C_{V2}$ and rear vehicle proximity level $C_{V3}$

S112 — Front vehicle proximity level $C_{V2}$, rear vehicle proximity level $C_{V3}$ is lower than predetermined threshold? — Yes

Yes (S107)

No (S109)

No (S112)

S108 — Determine that lane change is not possible

S110 — Determine that lane change is possible

S113 — Determine that lane change is not possible

S114 — Determine that lane change is possible

S115 — Output determination result

RETURN

FIG. 8

(A)

Determination target region
R1 based on current vehicle
speed

(B)

Determination target region
R1 based on current vehicle
speed

Determination target region R1
based on vehicle speed estimated
based on road shape of road lying
ahead

EP 3 489 926 A1

FIG. 9

```
                    START
       S101            │
    ┌─────────────────┴──┐
    │ Acquire subject vehicle │
    │ information        │
    └────────────────────┘
       S102            │
    ┌─────────────────┴──┐
    │ Acquire ambient information │
    └────────────────────┘
       S103            │
    ┌─────────────────┴──┐
    │ Calculate planned traveling │
    │ trajectory         │
    └────────────────────┘
       S201            │
    ┌─────────────────┴──┐
    │ Estimate vehicle speed of subject │
    │ vehicle based on road shape │
    └────────────────────┘
       S202            │
    ┌─────────────────┴──┐
    │ Set determination target region │
    │ based on estimated vehicle speed │
    └────────────────────┘
       S105            │
    ┌─────────────────┴──┐
    │ Set non-recommended region │
    └────────────────────┘
       S106            │
    ┌─────────────────┴──┐
    │ Set adjacent lane target region │
    └────────────────────┘
       S107            │
      ◇ Determination target region      No
        includes non-recommended  ─────────→ S109
        region?                              ◇ Adjacent vehicle present in    Yes
          │ Yes                                adjacent lane target region? ────→
          │                                      │ No
       S108                                       │
    ┌─────────────────┐                           │     S111
    │ Determine that lane change is not │         │   ┌──────────────────────┐
    │ possible         │                           │   │ Calculate front vehicle proximity level │
    └─────────────────┘                           │   │ Cv2 and rear vehicle proximity level Cv3 │
                                                  │   └──────────────────────┘
                                                  │        S112
                                                  │      ◇ Front vehicle proximity level  Yes
                                                  │        Cv2, rear vehicle proximity ────→
                                                  │        level Cv3 is lower than
                                                  │        predetermined threshold?       S203
                                                  │          │ No            ┌──────────────────────┐
                                                  │          │               │ Calculate subject vehicle proximity level Cv1 of │
                                                  │          │               │ subject vehicle approaching rear adjacent vehicle │
                                                  │          │               └──────────────────────┘
                                                  │          │                    S204
                                          S110    │          │          No  ◇ Subject vehicle proximity level
                                      ┌──────────┐│          │        ←──── Cv1 is lower than predetermined
                                      │ Determine that lane change is │      threshold?
                                      │ possible │          │                 S114  │ Yes
                                      └──────────┘          │            ┌──────────────────┐
                                              │      S113    │            │ Determine that lane change is │
                                              │   ┌──────────┴──┐         │ possible │
                                              │   │ Determine that lane change is │ └──────────────────┘
                                              │   │ not possible │
                                              │   └──────────────┘
       S115 ←─────────────────────────────────┘
    ┌──────────────────┐
    │ Output determination result │
    └──────────────────┘
              │
           RETURN
```

23

## INTERNATIONAL SEARCH REPORT

| International application No. |
| --- |
| PCT/JP2016/071712 |

A. CLASSIFICATION OF SUBJECT MATTER
*G08G1/16*(2006.01)i, *B60R21/00*(2006.01)i, *B60W30/12*(2006.01)i

According to International Patent Classification (IPC) or to both national classification and IPC

B. FIELDS SEARCHED

Minimum documentation searched (classification system followed by classification symbols)
G08G1/16, B60R21/00, B60W30/12

Documentation searched other than minimum documentation to the extent that such documents are included in the fields searched
Jitsuyo Shinan Koho         1922-1996   Jitsuyo Shinan Toroku Koho   1996-2016
Kokai Jitsuyo Shinan Koho   1971-2016   Toroku Jitsuyo Shinan Koho   1994-2016

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2015-184722 A  (Aisin AW Co., Ltd.),<br>22 October 2015 (22.10.2015),<br>paragraphs [0036] to [0054], [0066] to [0077]<br>& WO 2015/141322 A1 | 1,4,7<br>5-6<br>2-3 |
| Y | JP 2012-226392 A  (Honda Elesys Co., Ltd.),<br>15 November 2012 (15.11.2012),<br>paragraphs [0022] to [0023]<br>& US 2012/0296522 A1<br>paragraphs [0027] to [0028] | 5-6 |

☐ Further documents are listed in the continuation of Box C.     ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 03 October 2016 (03.10.16) | 18 October 2016 (18.10.16) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
| --- | --- |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2000020898 A